# EUROPÄISCHE PATENTSCHRIFT

(11) **EP 3 236 329 B1**
(45) Veröffentlichungstag und Bekanntmachung des Hinweises auf die Patenterteilung: **24.02.2021**
(21) Anmeldenummer: 16166626.8
(22) Anmeldetag: 22.04.2016
(51) Int. Cl.: G05B 23/02

(54) **LINEARANTRIEB UND VERFAHREN ZUM BETRIEB EINES LINEARANTRIEBS**
LINEAR DRIVE AND METHOD FOR OPERATING A LINEAR DRIVE
ENTRAÎNEMENT LINÉAIRE ET PROCÉDÉ DE FONCTIONNEMENT D'UN ENTRAÎNEMENT LINÉAIRE

(43) Veröffentlichungstag der Anmeldung: 25.10.2017
(73) Patentinhaber: Siemens Aktiengesellschaft, 80333 München (DE); FESTO AG & Co. KG, 73734 Esslingen (DE)
(72) Erfinder: Albert, Fabian, 71394 Kernen im Remstal (DE); Hamik, Reinhold, 71334 Waiblingen (DE); Hartramph, Ralf, 73095 Albershausen (DE); Veit, Andreas, 70794 Filderstadt (DE)

(56) Entgegenhaltungen:
- EP-A1- 1 028 866
- EP-A1- 1 777 034
- US-A1- 2002 084 173
- 4b Braime: "Watchdog Elite - Bucket Elevator & Conveyor Hazard Monitor", , 1. April 2013 (2013-04-01), XP055309077, UK Gefunden im Internet: URL:http://go4b.co.uk/sites/default/files/ documents/electronics/datasheets/watchdog- elite_uk.pdf [gefunden am 2016-10-10]
- "Linearantrieb eines Schubplattenverbandes", IP.COM JOURNAL, IP.COM INC., WEST HENRIETTA, NY, US, 20. August 2007 (2007-08-20), XP013121359, ISSN: 1533-0001

## Beschreibung

Die Erfindung betrifft einen Linearantrieb sowie ein Verfahren zum Betrieb eines Linearantriebs. Zudem betrifft die Erfindung eine Anlage mit einem Linearantrieb.

Linearantriebe dienen heute in vielen Bereichen zur Positionierung von Gütern und Werkstücken. Moderne Linearantriebe weisen Segmente auf, wobei die Segmente zur Bewegung von Läufern ausgebildet sind, wobei sich die Läufer auf den Segmenten befinden und von den Segmenten positioniert werden.

Nachteilig an Linearantrieben, insbesondere im Einsatz in einer Anlage wie einer Produktionsmaschine, ist die schwierige Wartung des Linearantriebs.

Aus der Offenlegungsschrift US 2002/084173 A1 ist ein Rollenförderband mit modularem Steuerungssystem bekannt.

In der Produktbeschreibung Braime: "Watchdog Elite - Bucket Elevator & Conveyor Hazard Monitor" wird ein LED-Display genannt, das eine Förderbandgeschwindigkeit anzeigt.

Aus der Offenlegungsschrift EP 1 028 866 A1 ist ein Linearantriebssystem bekannt, umfassend eine Statoranordnung mit einer Mehrzahl von in einer Anordnungslängsrichtung aufeinanderfolgenden Statorabschnitten. Es wird ferner eine Funktionsprüfung beschrieben.

In der Veröffentlichung "Linearantrieb eines Schubplattenverbandes" wird beschrieben, dass ein Reibradantrieb durch einen Linearantrieb nach dem Symplex-Prinzip ersetzt wird.

In der Offenlegungsschrift EP 1 777 034 A1 ist ein Gerät zum Anzeigen eines Betriebszustandes gezeigt. Dabei wird eine Länge eines Stabmaterials mit Hilfe von LEDs simuliert.

Daher ist es Aufgabe der Erfindung, die Wartung eines Linearantriebs und seiner Komponenten zu vereinfachen.

Die Aufgabe wird durch einen Linearantrieb gemäß Anspruch 1 gelöst.

Die Aufgabe wird weiter durch ein Verfahren zum Betrieb eines solchen Linearantriebs gemäß Anspruch 10 gelöst.

Eine Signalleiste weist hierbei auf:
- eine Mehrzahl von nebeneinander angeordneten Signalgeber, insbesondere optische Signalgeber,
- einen Sensor zur Bestimmung der Position und/oder einer Geschwindigkeit zumindest eines an der Signalleiste entlang beweglichen Läufers,
wobei die Signalleiste dazu ausgebildet ist, eine Position und/oder Bewegung des jeweiligen Läufers mittels der Signalgeber zu signalisieren,
wobei die Signalleiste weiter zur Anzeige eines Zustandes eines Segments ausgebildet ist, wobei der Läufer zur Bewegung entlang des Segments ausgebildet ist.

In einer vorteilhaften Ausgestaltung der Signalleiste umfasst die Signalleiste oder der Sensor eine Recheneinheit, wobei die Recheneinheit anhand eines Signals des Sensors oder des Zustandes des Segments zur Ansteuerung der Signalleiste ausgebildet ist.

Durch die hier beschriebene Signalleiste kann insbesondere ein bereits bestehender Linearantrieb mit einer solchen Signalleiste nachgerüstet werden und vorteilhaft in der Funktion erweitert werden.

Im Folgenden wird ein vorteilhafter Linearantrieb beschrieben. Der Linearantrieb weist aneinander angeordnete Segmente auf, wobei die Segmente als Statoren von Linearmotoren ausgebildet sind. Auf den Segmenten werden, analog eines Linearmotors, die Läufer bewegt. Zur Spannungsversorgung bzw. Stromversorgung des Segments dient jeweils eine Steuereinheit. Die Steuereinheit kann als Stromrichter oder als Verstärker ausgebildet sein. Die Steuereinheit weist vorteilhaft eine Regelung für Strom bzw. Spannung sowie eine Regelung für die Position und/oder Geschwindigkeit der Läufer auf. Eine Steuereinrichtung dient zur Vorgabe eines Bewegungsablaufs für die jeweiligen Läufer. Die Steuereinrichtung ist vorteilhaft als Speicherprogrammierbare Steuerung oder als Bewegungssteuerung ausgebildet. Die Steuereinheiten sind vorteilhaft als (intelligente) Frequenzumrichter oder Stromrichter ausgebildet, die den Bewegungsablauf in eine Spannung bzw. Strom für Spulen der Segmente bereitstellt. Zumindest ein Teil der Segmente weist einen Sensor auf. Der Sensor dient zur Bestimmung der Position des zumindest einen Läufers, der sich auf dem Segment befindet. Der Sensor stellt vorteilhaft die Position und/oder die Geschwindigkeit des jeweiligen Läufers für die Steuereinrichtung und/oder die entsprechende Steuereinheit, insbesondere für die Regelung derselben, bereit.

Das Segment für den Linearantrieb dient zur Induktion der Bewegung des zumindest einen Läufers. Das Segment weist optional einen Sensor auf, wobei der Sensor zur Bestimmung der Position und/oder der Geschwindigkeit des Läufers ausgebildet ist.

Dem Segment ist weiter eine Signalleiste, insbesondere die weiter oben schon erläuterte Signalleiste, zugeordnet, wobei die Signalleiste zur Anzeige eines Zustandes des Läufers und/oder zur Anzeige des Zustandes des Segments ausgebildet ist. Die Signalleiste muss nicht an dem entsprechenden Segment befestigt sein. Die Signalleiste kann auch von dem Segment beabstandet angeordnet sein.

Die Signalleiste kann eine Mehrzahl nebeneinander angeordnete Signalgeber, insbesondere optische Signalgeber, aufweisen. Die Signalgeber dienen zur Anzeige des Zustandes des Segments und/oder des Läufers. Vorteilhaft wird der Zustand des Segments an der Position der Signalleiste angezeigt, die der Position des Läufers und/oder dem Segment entspricht.

Beispielhaft kann jeweils derjenige Signalgeber der Signalleiste aufleuchten, welcher sich an der Position oder nahe der Position des Läufers oder des Segments befindet.

Die Signalleiste kann einem einzelnen Segment zugeordnet sein. Die Signalleiste kann in ihren Abmessungen auch über ein einzelnes Segment hinausgehen oder über mehrere Segmente verlaufen.

Das Segment kann sowohl fest oder auch lösbar mit der Signalleiste verbunden sein.

Unter einem Zustand des Segments wird der Verschmutzungsgrad oder ein Funktionszustand oder ein Erreichen eines Wartungszyklus des Segments verstanden.

Durch die Erfindung wird der Zustand des Segments angezeigt.

Besonders vorteilhaft erfolgt die Anzeige des Zustandes genau dort, wo ein Zustand anzuzeigen ist bzw. vorliegt. Somit wird eine Wartung eines Segments, eines Läufers oder eines Linearantriebs dort angezeigt, wo der Zustand gegebenenfalls zu einer Wartung oder einem Austausch des Segments erforderlich ist bzw. diese nach sich zieht. So kann der Benutzer unmittelbar erkennen, welcher Läufer oder welches Segment ausgetauscht bzw. gewartet werden sollte.

Die Signalleiste kann in einem einfachen Fall durch Aufleuchten eines Signalgebers, der entsprechend der Position des Läufers angeordnet ist, die Position des Läufers anzeigen.

Die Signalleiste kann beispielsweise durch Aufleuchten zumindest eines Teils der Signalgeber, welche dem entsprechenden Segment zugeordnet sind, den Zustand des Segments anzeigen.

Der Teil der Signalgeber, welche dem Segment zugeordneten sind dienen vorzugsweise zur Anzeige des Zustands, insbesondere eine Fehlfunktion des Segments.

Durch ein festgelegtes Muster kann anhand eines vorher festgelegten Codes ein bestimmter Zustand angezeigt werden. So kann ein Blinken der entsprechenden Signalgeber eine Fehlfunktion anzeigen. Weiter kann ein farbiges, insbesondere grünes, Leuchtsignal bei Einrichten einen bestandenen Selbsttest anzeigen. Die Signalleiste kann einen Zustand auch durch eine graphische Anzeige wie ein Display oder Leuchtsignale anzeigen. Erfindungsgemäß zeigen erste Signalgeber die Position des Läufers auf dem Segment, welcher der Signalleiste zugeordnet ist, an und zweite Signalgeber, insbesondere eine graphische Anzeige, zeigen den Zustand des Segments an.

In einer vorteilhaften Ausgestaltung des Segments bzw. der Signalleiste ist die Signalleiste als LED-Leiste ausgebildet. LED-Leisten sind in unterschiedlichen Beleuchtungsstärken, Leuchtfarben oder Anschlussmöglichkeiten bekannt. Die LED-Leiste kann dem Segment in einfacher Art und Weise an dem Segment befestigt werden. LED-Leisten sind überdies energieeffizient, wartungsarm und weisen eine besonders lange Lebensdauer auf.

In einer weiteren vorteilhaften Ausgestaltung des Segments bzw. der Signalleiste ist die Signalleiste dem Sensor zugeordnet.

Der Sensor dient vorteilhaft zur Bestimmung der Position und/oder zur Erfassung der Geschwindigkeit des Läufers. Weiter kann der Sensor auch zur Bestimmung des Zustandes des Segments ausgebildet sein.

Der Sensor kann gemäß folgender Wirkprinzipien ausgebildet sein:
- magnetostriktiv,
- kapazitiv,
- magnetisch,
- optisch,
- induktiv,
- differentialtransformatorisch.

Vorzugsweise ist der Sensor zur Bestimmung der Position des Läufers mit einem Hallsensor oder mehreren Hall-Sensoren ausgestattet.

Durch eine lösbare Verbindung kann die Signalleiste an dem Segment befestigt werden, wobei das Segment bereits ein Sensor aufweist. Vorzugsweise bilden ein Segment, ein Sensor und eine Signalleiste eine bauliche Einheit. Weiter kann der Sensor direkt durch eine technische Datenverbindung mit der Signalleiste verbunden sein. Somit ist die Signalleiste in der Lage, die Position des Läufers anzuzeigen, obgleich keine Verbindung des zugeordneten Segments zu einer Steuereinrichtung oder einer Steuereinheit besteht bzw. erforderlich ist.

Zur Erfassung der vorstehend ausgeführten Zustände können auch mehrere einzelne Sensoren kombiniert werden, wobei zumindest ein Teil der Sensoren jeweils einem Segment zugeordnet sind.

Bei einem lang ausgedehnten Linearantrieb können mehrere solche Sensoren oder Sensorelemente nebeneinander angeordnet sein.

Der Linearantrieb weist zumindest ein Segment auf, wobei der Linearantrieb eine Steuereinrichtung aufweist, wobei die Steuereinrichtung zur Vorgabe der Bewegung der Läufer auf dem zumindest einen Segment vorgesehen ist.

Der Linearantrieb kann dem oben Ausgeführtem entsprechen oder durch einen gewöhnlichen Linearmotor ausgebildet sein, dem zumindest eine Signalleiste zugeordnet ist. Weiter kann ein hier beschriebener Linearantrieb als Spindelantrieb, als Förderband, als Kettenantrieb oder Zahnriemenantrieb sowie als Kombination von zumindest zwei der vorstehenden Ausführungen ausgebildet sein.

Erfindungsgemäß stellt der Sensor die Position und/oder die Geschwindigkeit des zumindest einen Läufers für die Steuereinrichtung bereit und die Steuereinrichtung stellt anhand der Position und/oder der Geschwindigkeit des zumindest einen Läufers ein Signal für die Signalleiste bereit, wobei die Signalleiste anhand des Signals der Steuereinrichtung den Zustand an der Position des entsprechenden Läufers aufgibt.

Die Steuereinrichtung und/oder die Steuereinheit ist vorteilhaft mit dem Segment, welches dem Sensor zugeordnet ist, über eine bidirektionale Signalverbindung verbunden. Die bidirektionale Signalverbindung kann bidirektional Signale übertragen. Der Sensor stellt den Zustand des jeweiligen Segments und/oder des jeweiligen Läufers für die Steuereinrichtung und/oder der Steuereinheit oder der Steuereinrichtung bereit, indem der Zustand in einem Signal codiert an die Steuereinrichtung und/oder an die Steuereinheit übertragen wird.

Die Steuereinrichtung, die Steuereinheit und/oder der Sensor übertragen über eine bidirektionale Signalverbindung die Zustände an die Signalleiste. Die Signalleiste stellt das Signal vorteilhaft visuell dar. Durch die visuelle Darstellung ist der Benutzer in der Lage, den Zustand des Läufers, einer Steuereinheit und/oder des Segments durch die Signalleiste einfach zu erkennen.

Die bidirektionale Signalverbindung zwischen dem jeweiligen Sensor, der Steuereinrichtung und/oder der jeweiligen Steuereinheit dient der besonders einfachen Verbindung der vorstehend genannten Einheiten. Eine bidirektionale Signalverbindung kann durch eine Netzwerkverbindung ausgeführt sein. Die Netzwerkverbindung ist vorteilhaft echtzeitfähig. Beispielhaft dient zur Verbindung der Sensoren, der Steuereinrichtung und/oder der jeweiligen Steuereinheit die echtzeitfähige Ethernet-Verbindung wie DRIVE-CLiQ oder Profinet.

Durch die bidirektionale Verbindung lassen sich die Sensoren, Steuereinheiten und die Steuereinrichtung auf besonders einfache Art verbinden. Insbesondere durch die Wahl einer bidirektional ausgestalteten Signalverbindung kann der Linearantrieb einfach und ohne wesentliche Umgestaltungen erweitert werden.

In einer weiteren vorteilhaften Ausgestaltung des Linearantriebs stellt die Steuereinrichtung das Signal für die Signalleiste bereit.

Die Steuereinrichtung kann die Signalleiste anhand einer Vorgabe von Außen ansteuern, wie von einem Intranet oder Internet. Die Steuereinrichtung kann das Signal weiter von einem Sensor erhalten, das den Zustand des jeweiligen Segments und/oder den Zustand des Läufers erhält.

Der anzuzeigende Zustand kann mit Hilfe des Sensors ermittelt werden und/oder mit Hilfe der Steuereinrichtung berechnet werden. So kann der Ablauf eines Wartungsintervalls durch die Steuereinrichtung ermittelt werden oder von außen vorgegeben werden. Der Ablauf des Wartungsintervalls kann durch einen entsprechenden Signalcode durch die Signalleiste angezeigt werden. Durch diese Ausführung kann die Signalleiste auch als Human-Machine-Interface (HMI) der Steuereinrichtung, des jeweiligen Läufers, des jeweiligen Segments und/oder der jeweiligen Steuereinheit ausgebildet sein.

In einer weiteren vorteilhaften Ausgestaltung des Linearantriebs wird das Signal für die Signalleiste von einem Netzwerk, insbesondere einem Intranet, dem Internet oder durch eine Cloud, bereitgestellt.

Durch das Netzwerk, insbesondere durch eine (Service-) Cloud, kann die Steuereinrichtung zumindest einer Recheneinheit Daten zur Verfügung stellen. Unter Daten werden z.B. Motorströme, Positionen der Läufer, Einsatzzeiten von Läufern oder Segmenten verstanden. Die Daten betreffen insbesondere Zustände des Läufers und/oder des Segments. Die Daten werden vorteilhaft durch eine Recheneinheit analysiert und/oder gespeichert. Die Recheneinheit ist hierbei der Steuereinrichtung, der Steuereinheit, dem jeweiligen Segment und/oder der Durch die Recheneinheit können voraussichtlich eintreffende Zustände berechnet werden und über das Netzwerk und die Steuereinrichtung an die Signalleiste übertragen werden. Die Signalleiste dient dann zur Anzeige eines voraussichtlich eintreffenden Zustandes.

Der Verschmutzungsgrad kann entweder durch eine Berechnung anhand der vorgegebenen Abfolge von Arbeitsschritten berechnet werden, oder mit Hilfe eines Sensors oder einer visuellen Überwachung, insbesondere mit einer Kamera, ermittelt werden. Die Berechnung findet dabei vorteilhaft in der Steuereinrichtung oder in der Recheneinheit statt. Bei einer Verschmutzung des Läufers kann dies beispielhaft durch ein Farbsignal an der Position des Läufers angezeigt werden.

Vorteilhaft kann durch die visuelle Anzeige auch eine Verschmutzung kenntlich gemacht werden, welche das Bedienpersonal nicht visuell erkennen kann. Weiter können unvorteilhafte Rückstände auf dem jeweiligen Segment oder dem jeweiligen Läufer angezeigt werden, welche ebenfalls nicht visuell durch das Bedienpersonal - jedoch durch einen Sensor oder einer visuelle Überwachung erkannt werden kann. So kann vorteilhaft die Betriebssicherung erhöht werden.

Durch diese Ausgestaltung können fehlerhafte Läufer während des Betriebs des Linearantriebs vereinfacht entfernt werden, da auch während der Bewegung des jeweiligen Läufers dessen Zustand angezeigt wird.

Bei einem auszutauschenden oder zu wartenden Läufer können dies die entsprechenden Signalgeber in einem dem Zustand entsprechenden Signal kennzeichnen. Beispielhaft kann die Position des Läufers durch ein Leuchtsignal desjenigen Signalgebers in einer grünen Farbe anzeigen. Bei einem defekten, verschmutzten oder wartungsbedürftigen Läufer kann der entsprechende Signalgeber eine rotes Lichtsignal ausgeben und somit die Notwendigkeit anzeigen, den Läufer zu reinigen bzw. auszutauschen.

Bei einer weiteren vorteilhaften Ausgestaltung des Linearantriebs umfasst der Linearantrieb weiter eine Signalverbindung zwischen dem jeweiligen Segment und der Steuereinrichtung, wobei die Signalverbindung sowohl zur Übertragung der Position und/oder der Geschwindigkeit vom Sensor zur Steuereinrichtung als auch zur Übertragung von Zustand-Signalen, insbesondere des jeweiligen Läufers, von der Steuereinrichtung zu der jeweiligen Signalleiste vorgesehen ist.

Durch die bidirektionale Signalverbindung können der mit dem Sensor ermittelte Zustand des Segments und/oder der Zustand des Läufers zu der jeweiligen Steuereinheit und/oder Steuereinrichtung übertragen werden.

Durch die bidirektionale Signalverbindung kann Signale bezüglich des Zustands des Segments von der Steuereinrichtung und/oder der jeweiligen Steuereinheit an die Signalleiste übertragen werden.

Insbesondere falls der Sensor und die Signalleiste eine Einheit bilden, trägt eine bidirektional Signalverbindung zur Verminderung des Verkabelungsaufwandes bei.

Beispielhaft kann die oben ausgeführte Netzwerkverbindung als bidirektionale Signalverbindung dienen.

In einer weiteren vorteilhaften Ausgestaltung des Linearantriebs ist die Signalleiste zur Anzeige eines unvorhergesehenen Zustandes des entsprechenden Segments oder einer Steuereinheit ausgebildet, wobei die Steuereinheit dem entsprechenden Segment zugeordnet ist.

Unter einem unvorhergesehenen Zustand wird insbesondere ein Defekt eines Läufers oder eines Segmentes verstanden.

Beispielhaft kann der unvorhergesehene Zustand des Segments oder des Läufers durch einen weiteren Sensor, z.B. in der entsprechenden Steuereinheit ermittelt werden. Falls zum Beispiel eine Spule des Segments eine Unterbrechung aufweist, kann diese Unterbrechung mit Hilfe eines Sensors, die der Steuereinheit zugeordnet ist, festgestellt werden.

Vorteilhaft weist der Sensor eine Recheneinheit, insbesondere einen Mikrocontroller auf, wobei der Mikrocontroller den vom Sensor erfassten Zustand registriert. Die Recheneinheit dient vorteilhaft auch zur Verarbeitung der erfassten Zustände. Der Zustand wird mit Hilfe der Recheneinheit in ein übertragbares Signal gewandelt und der Steuereinrichtung, der Steuereinheit und/oder der Signalleiste bereitgestellt.

In einer weiteren vorteilhaften Ausgestaltung des Linearantriebs weist der zumindest eine Läufer jeweils eine Kennung und/oder ein Speicherelement auf, wobei das Speicherelement zur Aufnahme eines Zustandes des jeweiligen Läufers ausgebildet ist, und der Zustand des jeweiligen Läufers durch die Signalleiste anzeigbar ist.

Unter einer Kennung kann ein Barcode oder ein QR-Code oder eine sonstige auslesbare Kennung, die zur Identifizierung des Läufers geeignet ist, verstanden. Die Kennung ist vorzugsweise dem Läufer zugeordnet.

Als Speicherelement dient beispielsweise ein RFID-Chip. Das Speicherelement dient zur Aufnahme von Zuständen oder weiteren Daten, die den jeweiligen Läufer oder das jeweilige Segment betreffen. So kann ein Fehlercode wie ein Verschmutzungszustand oder Wartungszustand, welches von der Steuereinrichtung in Bezug auf den jeweiligen Läufer in dem Speicherelement abgespeichert worden ist, im Rahmen von Wartungsarbeiten ausgelesen werden.

Mit Hilfe einer Leseeinheit können Daten, die im Speicherelement abgespeichert sind oder in der Kennung vorliegen, ausgelesen werden. Die Daten können an die Steuereinrichtung, die Steuereinheit und/oder an das Netzwerk übermittelt werden. Beispielhaft kann ein Zustand, der durch den Sensor ermittelt worden ist, mit dem entsprechenden Zustand, insbesondere einem berechneten Zustand, verknüpft werden oder der Zustand korrigiert werden. Der korrigierte Zustand wird dann an die Signalleiste übertragen.

Ein hier beschriebener Linearantrieb kann in einer Vielzahl von industriellen Anlagen Einsatz finden. Beispielhaft erfolgt der Einsatz des Linearantriebs in einer Werkzeugmaschine, in einer Verpackungsmaschine, in einer Produktionsmaschine, in einer Abfüllanlage. Besonders vorteilhaft eignet sich ein solcher Linearantrieb, Güter und Werkstücke mit Hilfe der Läufer zu positionieren (in einer Anlage) und/oder Güter und Werkstücke von einer Anlage zu einer anderen Anlage zu transportieren.

In einer vorteilhaften Ausgestaltung der Anlage ist der Anlage zumindest ein Segment zugeordnet, wobei zumindest dem einen Segment ein Sensor zugeordnet ist, die Anlage weiter eine Signalleiste aufweist, wobei die Signalleiste von außerhalb der Anlage sichtbar ist und wobei die Signalleiste zur Anzeige zumindest eines Zustandes des Segments und/oder des Läufers ausgebildet ist.

Vorteilhaft ist die Signalleiste an einer Außenseite der Anlage befestigt.

Die von außen sichtbare Signalleiste kann auch einer Signalleiste, welche dem Linearantrieb direkt zugeordnet ist, ergänzen. Die von außen sichtbare Signalleiste zeigt vorteilhaft das Gleiche an.

Durch die vorstehende Ausführung der Anlage kann ein Benutzer unmittelbar den Zustand eines Segments und/oder eines Läufers im Inneren der Anlage erkennen.

Im Folgenden wird die Erfindung anhand von Figuren näher beschrieben und erläutert. Dabei zeigen die Figuren Merkmale, die auch zu neuen Merkmalskombinationen kombiniert werden können oder einzelne Merkmale isoliert zu neuen Ausführungsformen zusammengefügt werden können. Es zeigen:
- FIG 1: eine Signalleiste mit Sensor,
- FIG 2: ein Segment und ein Läufer,
- FIG 3: einen Linearantrieb,
- FIG 4: ein möglichen Verlauf von Signalverbindungen,
- FIG 5: ein weiterer möglicher Signalverlauf,
- FIG 6: eine Ausführung einer Signalverbindung,
- FIG 7: eine Signalleiste sowie
- FIG 8: eine Anlage mit einem Linearantrieb.

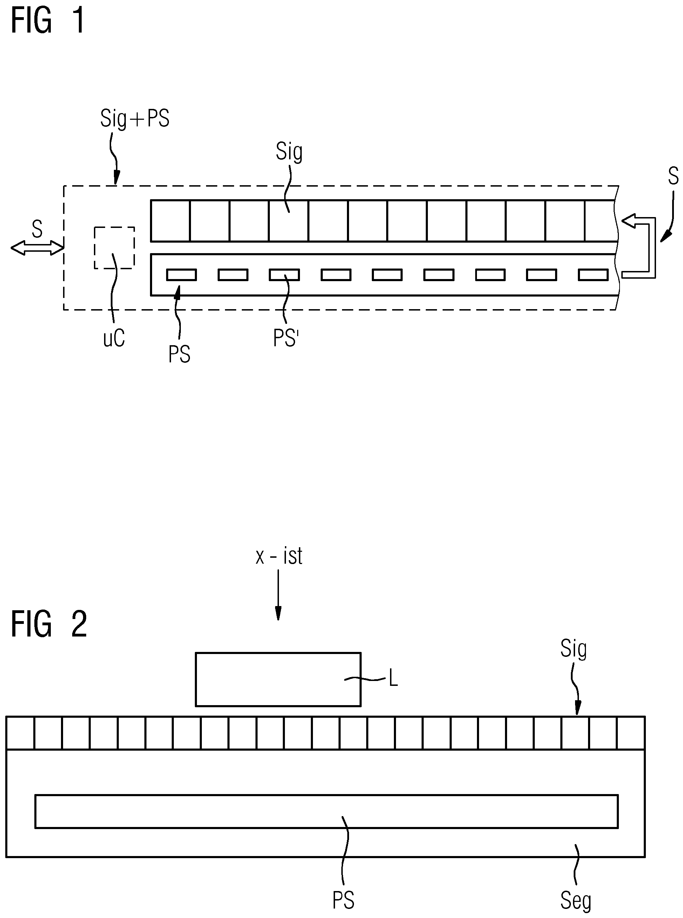

**FIG 1** zeigt eine Signalleiste Sig mit einem Sensor PS. Die Signalleiste Sig weist mehrere Signalgeber auf. Die Signalgeber sind hier als Leuchtelemente, insbesondere als LEDs, ausgestattet. Die Signalgeber können jedoch auch jeweils als akustische Signalgeber, als graphisches Anzeigeelement oder als Flüssigkeitskristallanzeige ausgeführt sein. Der Signalleiste Sig ist ein Sensor PS zugeordnet. Die gestrichelte Umrandung des Sensors zeigt an, dass der Sensor PS und die Signalleiste Sig eine Einheit bilden. Der Sensor PS weist einzelne Sensorelemente PS' auf. Der Signalleiste ist optional eine Recheneinheit uC, insbesondere ein Mikrokontroller, zugeordnet. Vorteilhaft ist die Recheneinheit uC auf ein Teil der Einheit. Die Recheneinheit uC kann auch dem Sensor PS selbst zugeordnet sein. Der Pfeil von dem Sensor PS, der hier eine Mehrzahl von einzelnen Sensorelementen PS' umfasst, symbolisiert einen Übertrag von Signalen S von dem Sensor PS oder dem jeweiligen Sensorelement PS' zur Signalleiste Sig. Es kann auch jeweils ein Sensorelement PS' mit jeweils einem Signalgeber verbunden sein. Die Signalleiste Sig weist auch eine Schnittstelle auf, wobei die Schnittstelle zur Ausgabe und Eingabe von Signalen S dient. Die Schnittstelle kann als Netzwerkanschluss ausgeführt sein.

**FIG 2** zeigt ein Segment Seg und einen Läufer L. Der Läufer L kann auch auf Rollen und/oder mit Hilfe einer Schiene (nicht gezeigt) auf dem Segment Seg positioniert werden. Der Läufer L weist eine Position x-ist auf dem Segment Seg auf. Die Position x-ist wird mit Hilfe des Sensors PS bestimmt. Weiter ist dem Segment Seg eine Signalleiste Sig zugeordnet. Die Signalleiste Sig dient zur Anzeige der Position x-ist des Läufers L. Die Signalleiste Sig ist an dem Segment Seg derart befestigt, dass die die Signalgeber der Signalleiste Sig die Position x-ist des Läufer L visuell erkennbar anzeigen können. Voreilhaft ist hierzu die Signalleiste Sig an einer Seite des Segments Seg angeordnet.

Der Sensor PS zur Bestimmung der Position x-ist des Läufers L basiert beispielhaft auf dem Prinzip der Magnetostriktion. Möglich ist auch ein Sensor PS, der eine Mehrzahl von Hall-Sensoren als Sensorelemente PS' aufweist. In einem solchen Fall bedarf der Läufer L eines Magnetelements. Möglich ist jedoch auch ein optischer Sensor PS, wobei das Magnetelement durch ein Leuchtmittel zu ersetzten ist. Die Signalgeber sind vorteilhaft als LEDs ausgeführt.

Das Segment weist optional einen Versorgungsanschluss für die Spannungsversorgung bzw. Stromversorgung auf. Der Spannung bzw. der Strom ist zur Bewegung des zumindest einem Läufer L auf dem Segment Seg vorgesehen. Dieser dient zum Anschluss an eine Steuereinheit U (nicht gezeigt).

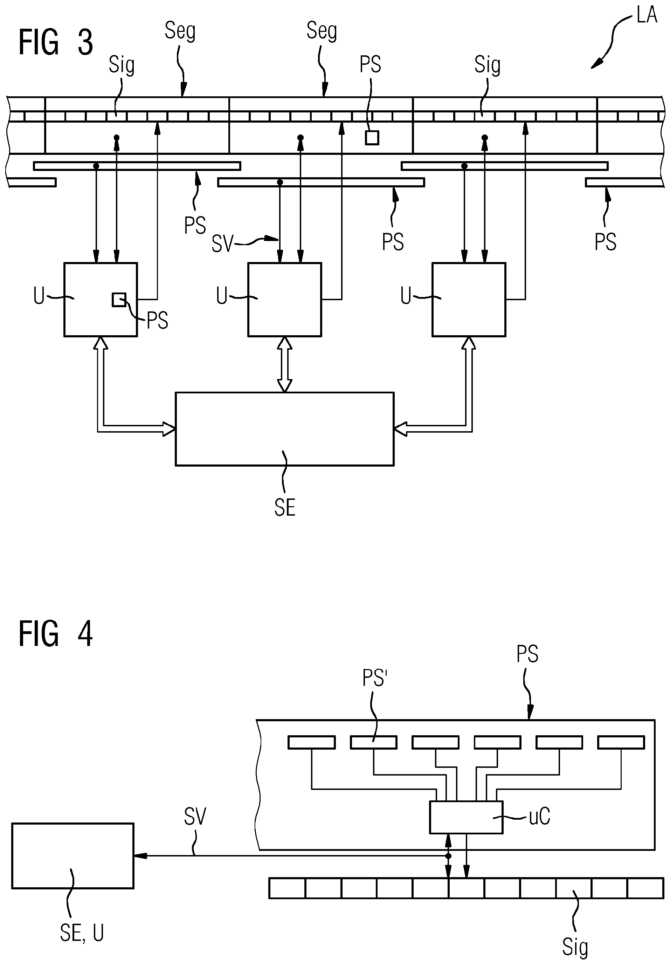

**FIG 3** zeigt einen Linearantrieb LA. Der Linearantrieb LA weist sequenziell aneinander angeordnete Segmente Seg auf. Die Segmente Seg dienen zur Bewegung und/oder zur Führung von Läufern L. Die Segmente Seg können auch bereichsweise als Förderband ausgeführt sein.

Dem jeweiligen Segment Seg ist jeweils ein Sensor PS zugeordnet. Obgleich in FIG 3 den Segmente Seg jeweils einen Sensor PS zugeordnet ist, sind die Sensoren PS für die Funktion des Linearantriebs LA nicht notwendig. Der Sensor PS, der jeweils den Segment Seg zugeordnet ist, dient vorteilhaft zur Ermittlung der Position x-ist des jeweiligen Läufers L auf dem Segment Seg. Weitere Sensoren PS, die beispielsweise jeweils einem Segment Seg zugeordnet sind, dienen zur Ermittlung von einem weiteren Zustand des Läufers L und/oder des Segments Seg. Ein weiterer Zustand des Segments Seg kann die Temperatur des Segments Seg sein.

Die Segmente Seg ist jeweils mit einer Steuereinheit U verbunden. Die Steuereinheit U dienen zur Spannungs- bzw. Stromversorgung des Segments Seg. Die Steuereinheit U selbst weist vorteilhaft optional einen Sensor PS' auf. Die Steuereinheiten U sind jeweils mit einem Sensor PS über eine Signalverbindung SV zum Austausch von Signalen S verbunden. Gezeigt ist jeweils ein Segment Seg mit einer zugeordneten Steuereinheit U. Die jeweiligen Steuereinheiten U sind mit einer Steuereinrichtung SE über eine Signalverbindung SV verbunden.

Die Steuereinheit U dient zur Steuerung des jeweiligen Segments Seg. Die Steuereinrichtung SE dient zur Steuerung der Bewegung von Läufern L. Die Steuereinrichtung SE steuert also gewissermaßen die Steuereinheiten U. Die Steuereinheit U ist beispielhaft durch einen Stromrichter, optional mit einer Regelung erweitert, ausgeführt. Die Steuereinrichtung SE ist vorteilhaft als Bewegungssteuerung, insbesondere als Speicherprogrammierbare Steuerung, ausgeführt.

Der Sensor PS ermittelt vorteilhaft die Position x-ist des Läufers L und übermittelt die Position x-ist de Läufers L an die Steuereinheit U. Die Steuereinheit U übermittelt die Position x-ist des Läufers L an die entsprechende Signalleiste Sig. Die Signalleiste Sig dient insbesondere zur Anzeige der Position x-ist des Läufers L. Die Signalverbindungen S sind unidirektional gezeichnet. Je nach Ausführung der Signalverbindung SV kann die jeweilige Signalverbindung SV auch bidirektional ausgeführt sein. Ob eine Signalverbindung SV bidirektional oder zumindest unidirektional ausgestaltet ist, zeigen die Richtungen der Pfeile an.

Optional kann die Steuereinheit U und/oder das Segment Seg ebenfalls einen Sensor PS aufweisen. Der Sensor PS des Segments kann als Temperatursensor ausgeführt sein. Der Sensor PS der Steuereinheit U kann auch als Stromsensor ausgeführt sein. Der jeweilige Stromsensor dient zur Bestimmung des Stroms, der durch die Steuereinheit U für das Segment Seg bereitgestellt wird. Der jeweilige Temperatursensor dient insbesondere zur Bestimmung der Temperatur der Spulen des Segments Seg.

Bei Verlassen eines Normalbereichs des ermittelten Zustandes des Segments Seg, z. B. einer hohen Temperatur, kann dies durch die Signalleiste Sig angezeigt werden. Ebenso kann an der Signalleiste Sig der Zustand der entsprechenden Steuereinheit U angezeigt sein.

**FIG 4** zeigt einen möglichen Verlauf der Signalverbindungen SV. Gezeigt ist ein Sensor PS. Der Sensor weist mehrere Sensorelemente PS' auf, wobei der Sensor PS zur Bestimmung der Position x-ist eines Läufers L auf einem Linearantrieb LA ausgebildet sein kann. Der Sensor PS weist überdies eine Recheneinheit uC auf. Die Recheneinheit uC ist vorteilhaft als Mikrocontroller ausgeführt. Die Recheneinheit uC ist über eine Signalverbindung SV mit einer Signalleiste Sig verbunden. Die Signalverbindung SV kann sowohl unidirektional als auch bidirektional ausgestaltet sein.

Mit Hilfe der Signalverbindung S, die bidirektional ausgestaltet ist, wird die Steuereinheit U und/oder die Steuereinrichtung SE mit dem Sensor PS und der Signalleiste Sig verbunden.

Der Sensor PS kann unterschiedliche Arten von Sensorelementen PS' aufweisen, z. B. Hall-Sensorelemente zur Bestimmung der Position x-ist eines Läufers. Weiter kann ein Sensorelement PS' als Temperatursensorelement ausgebildet sein. Das Temperatursensorelement kann die Temperatur des Segments Seg bestimmen, falls der Sensor PS an dem Segment Seg befestigt ist.

Die Signalleiste Sig ist hier dem Sensor PS zugeordnet. Die Signalleiste Sig und der Sensor PS können eine bauliche Einheit bilden. Die Einheit weist vorteilhaft eine Schnittstelle für die Signalverbindung S auf, wobei die Signalverbindung S bidirektional ausgebildet ist.

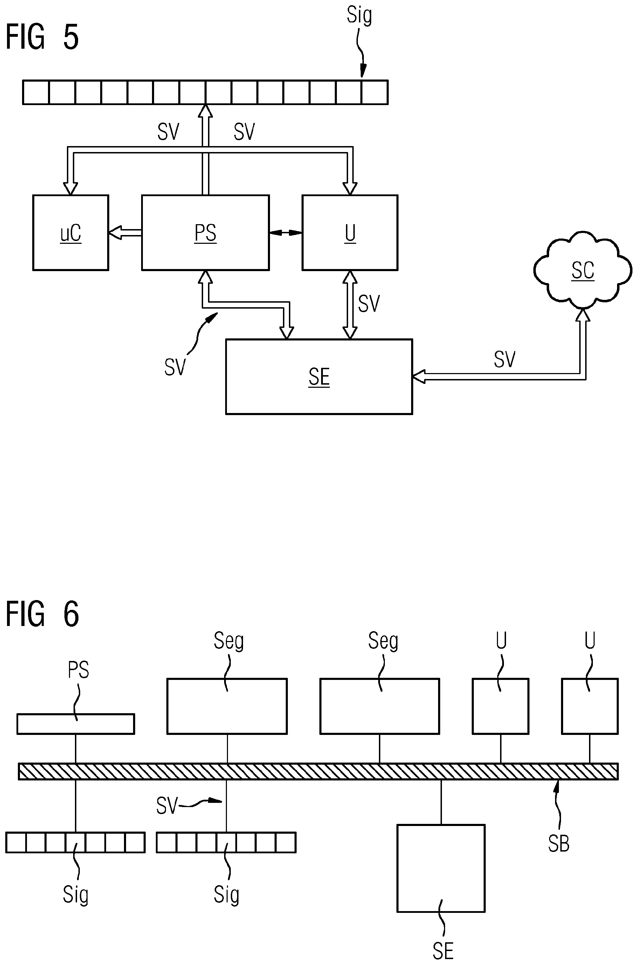

**FIG 5** zeigt einen weiteren möglichen Signalverlauf. Die Steuereinheit SE ist hier über eine Signalverbindung SV an ein Rechnernetz SC, insbesondere eine Service-Cloud, angebunden. Das Rechnernetz SC kann die Zustände der einzelnen Elemente des Linearantriebs LA der Steuereinrichtung SE zur Verfügung stellen. Elemente des Linearantriebs sind hier insbesondere der einzelnen Segmente Seg und/oder der jeweiligen Läufer L, der Steuereinrichtung SE zur Verfügung stellen. Die Steuereinrichtung SE stellt die Zustände der jeweiligen Steuereinheit U bereit. Die Bereitstellung der Zustände erfolgt durch eine Signalverbindung SV. Die Signalverbindungen SV sind hier jeweils bidirektional ausgeführt.

Die Steuereinrichtung SE und die Steuereinheit U sind jeweils mit dem Sensor PS verbunden. Der Sensor PS ermittelt die Zustände des jeweiligen Segments Seg. Der Sensor PS stellt die ermittelten Zustände auch der Recheneinheit uC bereit, wobei die Recheneinheit uC dem jeweiligen Sensor PS zugeordnet ist. Die Recheneinheit uC ist weiter durch eine bidirektionale Signalverbindung S mit der Steuereinheit U verbunden. Die Recheneinheit uC und optional der Sensor PS ist mit einer unidirektionalen Signalverbindung SV mit der Signalleiste Sig verbunden. Die Signalleiste Sig ist optional auch mit der Steuereinheit U verbunden.

Der Sensor PS ermittelt zumindest einen Zustand zumindest einen Läufers L, zumindest und/oder zumindest eines Segments Seg. Der Zustand wird der Steuereinheit U, der Steuereinrichtung SE und/oder der Signalleiste U bereitgestellt. Die Signalleiste Sig dient zur Anzeige des Zustandes des Segments Seg und/oder des Läufers L. Beispielhaft leuchtet die Signalleiste Sig an der Position x-ist eines Läufers L auf dem Segment Seg auf.

Vorteilhaft kann die Steuereinrichtung PS den ermittelten Zustand aus dem Sensor PS mit einem Zustand, der durch das Rechnernetz bereitgestellt wird, vergleichen.

**FIG 6** zeigt eine Ausführung der Signalverbindungen SV. Die Signalverbindungen S sind hier als Signalbus SB dargestellt. Die Signalverbindung SV als Signalbus SB dient hier zur Verbindung der Steuereinheit U, der Steuereinrichtung SE, des jeweiligen Segments Seg, der jeweiligen Signalleiste Sig und des jeweiligen Sensors PS. Die Signalverbindungen sind jeweils bidirektional ausgestaltet. Als Signalverbindungen SV oder der Signalbus SB dienen vorteilhaft eine Netzwerkverbindung wie ein Ethernet, ein ProfiBUS, EtherCAT oder Drive-CliQ. Vorteilhaft kann ein solcher Signalbus SB zur Übertragung von unterschiedlichen Zuständen, Signalen oder Informationen genutzt werden. Bei geeigneter Wahl eines Signalbuses SB kann so der Aufwand der Verkabelung stark verringert werden, weil nur noch eine universale Schnittstelle verwendet werden, an die oben aufgeführte Elemente des Linearantriebs LA verbunden sein können und Informationen wie Signale oder Zustände austauschen.

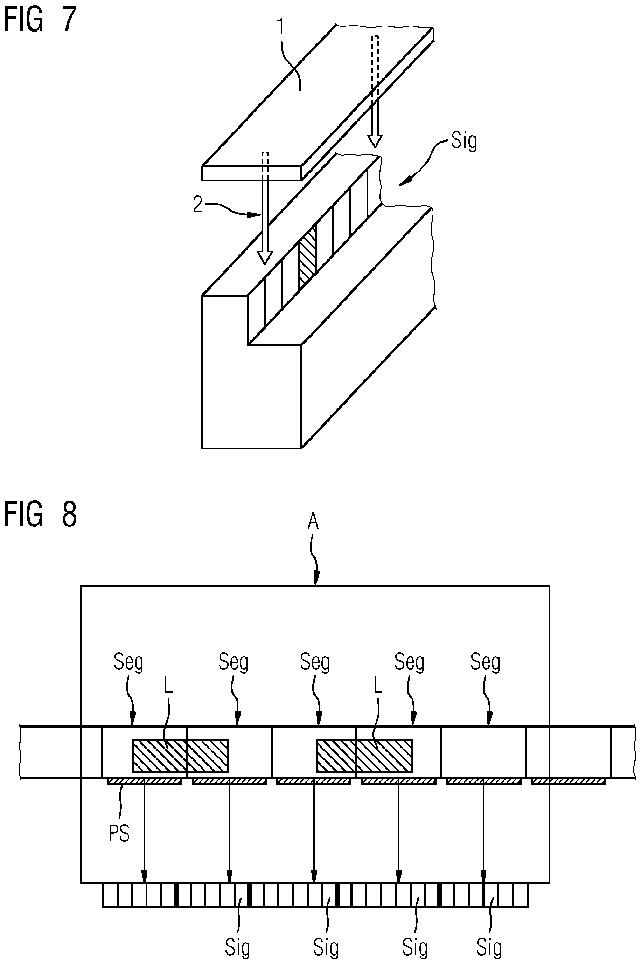

**FIG 7** zeigt eine Signalleiste Sig. Die Signalleiste Sig weist eine Mehrzahl von Signalgebern auf. Die Signalgeber sind jeweils als optische Signalgeber, insbesondere als LEDs, ausgeführt. Die Signalgeber leuchten bei Ansteuerung vorteilhaft in unterschiedlichen Farben. So können jeweils unterschiedliche Zustände in jeweils unterschiedlichen Farben angezeigt werden. Weiter können jeweils unterschiedliche Zustände in unterschiedlichen Leuchtmustern (periodisches Blinken, andauerndes Aufleuchten,...)

Die Signalgeber sind so angeordnet, dass die der Zustand, der durch den jeweiligen Signalgeber der Signalleiste Sig von einer Seite gut erkennbar ist. Die Signalleiste wird von einem Deckel 1 abgedeckt. Die Signal Deckel 1 deckt die Signalleiste Sig von oben ab. Die Signalgeber sind eingerückt ausgebildet, so dass durch den Deckel 1 von oben und dem Gehäuse der Signalleiste Sig die Signalgeber vor äußeren Verunreinigungen geschützt sind. Der Deckel wird von oben, wie durch die Pfeile 2 dargestellt, an der Signalleiste Sig befestigt. Die Signalleiste und der Deckel können auch einstückig ausgeführt sein.

Die Schraffur des einen Signalgebers zeigt an, wie ein Leuchtsignal von der entsprechenden Seite betrachtet, sichtbar ist.

**FIG 8** zeigt eine Anlage A mit einem Linearantrieb LA. Der Linearantrieb LA umfasst Segmente Seg und Läufer L. Dem jeweiligen Segment Seg ist ein jeweilig ein Sensor PS zugeordnet. Der Sensor PS dient zur Ermittlung der Position x-ist des jeweiligen Läufers.

Dem jeweiligen Sensor PS und/oder dem jeweiligen Segment Seg ist eine Signalleiste Sig zugeordnet. Die Signalleiste ist von außen sichtbar an der Anlage A angebracht. Dem jeweiligen Segment Seg ist jeweils ein Sensor PS zugeordnet.

Der Linearantrieb LA, welcher der Anlage A zugeordnet ist, kann selbst ebenfalls eine oder mehrere Signalleisten Sig aufweisen. Die Signalleisten Sig des Linearantriebs LA sind nicht notwendig von außen erkennbar.

Durch die Anordnung der Signalleiste Sig an der Außenseite der Anlage A ist die Position x-ist des jeweiligen Läufers L sichtbar, auch wenn sie Läufer selbst in der Anlage nicht sichtbar sind. Weiter kann von außen sichtbar der Zustand eines Segments Seg durch die entsprechende Signalleiste Sig angezeigt werden. So ist die Position x-ist der Läufer L und/ oder der Zustand der Segmente Seg visuell von außerhalb der Anlage A erkennbar.

Zusammengefasst betrifft die Erfindung einen Linearantrieb LA und eine Anlage. Die Signalleiste Sig ist jeweils zumindest einem Segment Seg zugeordnet. Die Signalleiste Sig dient zur Anzeige zumindest eines Zustandes des Segments Seg, wobei der zumindest eine Läufer L durch das jeweilige Segment Seg bewegt wird. Der Zustand wird durch einen Sensor PS zugeordnet, der dem jeweiligen Segment Seg zugeordnet ist. Der Zustand kann zusätzlich aus einem Rechnernetz, insbesondere einer Service-Cloud, an die Signalleiste Sig übertragen werden. Beispiele für einen Zustand des Läufers L ist dessen jeweilig Position x-ist des Läufers L oder eine Wartungsbedürftigkeit. Beispielhaft für den Zustand des jeweiligen Segments Seg ist die Temperatur oder die Funktionsfähigkeit. Der Zustand wird vorteilhaft dort einem Benutzer präsentiert, der die Anlage, insbesondere den Linearantrieb LA der Anlage, wartet. So kann durch die Erfindung die Zeit für die Wartung der Anlage bzw. des Linearantriebs LA reduziert werden, weil der Bediener des Linearantriebs LA unmittelbar den Zustand des jeweiligen Läufers L oder des jeweiligen Segments Seg erkennt.

## Patentansprüche

1. Linearantrieb (LA), aufweisend zumindest ein Segment (Seg) für den Linearantrieb (LA) zur Bewegung von zumindest einem Läufer (L) auf dem Segment (Seg), wobei dem Segment (Seg) ein Sensor (PS) zumindest zur Bestimmung der Position (x-ist) und/oder der Geschwindigkeit (v-ist) des zumindest einen Läufers (L) auf dem Segment (Seg) zugeordnet ist, wobei dem Segment (Seg) eine Signalleiste (Sig) zugeordnet ist, wobei die Signalleiste (Sig) eine Mehrzahl nebeneinander angeordnete Signalgeber, insbesondere optische Signalgeber, aufweist, wobei der Linearantrieb (LA) eine Steuereinrichtung (SE) aufweist, wobei die Steuereinrichtung (SE) zur Vorgabe der Bewegung des zumindest einen Läufer (L) auf dem zumindest einen Segment (Seg) vorgesehen ist, wobei der Sensor (PS) ausgestaltet ist, die Position (x-ist) und/oder die Geschwindigkeit (v-ist) des zumindest einen Läufers (L) für die Steuereinrichtung (SE) bereitzustellen, **dadurch gekennzeichnet, dass** die Signalleiste (Sig) zur Anzeige eines Zustands des Segments (Seg) ausgebildet ist, wobei der Zustand des Segments (Seg) den Verschmutzungsgrad oder einen Funktionszustand oder ein Erreichen eines Wartungszyklus des Segments (Seg) angibt, und die Steuereinrichtung (SE) ausgestaltet ist, anhand der Position (x-ist) und/oder der Geschwindigkeit (v-ist) des zumindest einen Läufers (L) ein Signal (S) für die Signalleiste (Sig) bereitzustellen, wobei die Signalleiste (Sig) ausgebildet ist, anhand des Signals (S) der Steuereinrichtung (SE) den Zustand (Zust) an der Position (x-ist) anzugeben, die der Position des Läufers (L) entspricht, wobei erste Signalgeber der Signalleuchte die Position des Läufers auf dem der Signalleiste zugeordneten Segment anzeigen und zweite Signalgeber der Signalleiste den Zustand des Segments anzeigen.

2. Linearantrieb (LA) nach Anspruch 1, wobei die Signalleiste (Sig) als LED-Leiste ausgebildet ist.

3. Linearantrieb (LA) nach Anspruch 1, wobei die Signalleiste (Sig) dem Sensor (PS) zugeordnet ist.

4. Linearantrieb (LA) nach einem der vorstehenden Ansprüche, wobei die Steuereinrichtung (SE) das Signal (S) für die Signalleiste (Sig) bereitstellt.

5. Linearantrieb (LA) nach einem der vorstehenden Ansprüche, wobei das Signal (S) für die Signalleiste (Sig) von einem Netzwerk bereitgestellt wird.

6. Linearantrieb (LA) nach einem der vorstehenden Ansprüche, wobei der Linearantrieb (LA) weiter eine Signalverbindung (SV) zwischen dem jeweiligen Segment (Seg) und der Steuereinrichtung (SE) umfasst, wobei die Signalverbindung (SV) sowohl zur Übertragung der Position (x-ist) und/oder der Geschwindigkeit (v-ist) vom Sensor (PS) zur Steuereinrichtung (SE) als auch zur Übertragung von Zustand-Signalen, insbesondere des jeweiligen Läufers (L), von der Steuereinrichtung (SE) zu der jeweiligen Signalleiste (Sig) vorgesehen ist.

7. Linearantrieb (LA) nach einem der vorstehenden Ansprüche, wobei die Signalleiste (Sig) zur Anzeige eines unvorhergesehenen Zustandes des entsprechenden Segments (Seg) oder einer Steuereinheit (U) ausgebildet ist, wobei die Steuereinheit dem entsprechenden Segment zugeordnet ist.

8. Linearantrieb (LA) nach einem der vorstehenden Ansprüche, wobei der zumindest eine Läufer (L) jeweils eine Speicherelement (DE) aufweist, wobei das Speicherelement (DE) zur Aufnahme eines Zustandes des jeweiligen Läufers (L) ausgebildet ist, und der Zustand des jeweiligen Läufers (L) durch die Signalleiste (Sig) anzeigbar ist.

9. Anlage (A), insbesondere Produktionsmaschine, Werkzeugmaschine, Verpackungsmaschine oder Abfüllanlage, aufweisend einen Linearantrieb (LA) nach einem der Ansprüche 1 bis 8.

10. Verfahren zum Betrieb eines Linearantriebs (LA) wobei ein Sensor (PS) zumindest eine Position (x-ist) und/oder eine Geschwindigkeit (v-ist) eines Läufers (L) auf einem dem Sensor (PS) zugeordneten Segment (Seg) des Linearantriebs (LA) bestimmt und die Position (x-ist) und/oder die Geschwindigkeit (v-ist) des zumindest einen Läufers (L) für eine Steuereinrichtung (SE) des Linearantriebs (LA) bereitstellt, wobei die Steuereinrichtung (SE) eine Bewegung des zumindest einen Läufers (L) auf dem zumindest einen Segment (Seg) vorgibt, wobei dem Segment (Seg) eine Signalleiste (Sig) zugeordnet ist, wobei die Signalleiste (Sig) eine Mehrzahl nebeneinander angeordnete Signalgeber aufweist, **dadurch gekennzeichnet, dass** von der Steuereinrichtung (SE) anhand der Position (x-ist) und/oder der Geschwindigkeit (v-ist) des zumindest einen Läufers (L) ein Signal (S) für die Signalleiste (Sig) bereitgestellt wird, wobei die Signalleiste (Sig) anhand des Signals (S) der Steuereinrichtung (SE) einen Zustand (Zust) des Segments (Seg) an der Position (x-ist) angibt, die dem Läufer (L) entspricht, wobei der Zustand des Segments (Seg) den Verschmutzungsgrad oder einen Funktionszustand oder ein Erreichen eines Wartungszyklus des Segments (Seg) angibt, wobei erste Signalgeber der Signalleiste die Position des Läufers auf dem der Signalleiste zugeordneten Segment anzeigen und zweite Signalgeber der Signalleiste den Zustand des Segments anzeigen.

## Claims

1. Linear drive (LA), comprising at least one segment (Seg) for the linear drive (LA) for moving at least one rotor (L) on the segment (Seg), wherein a sensor (PS) for at least determining the position (x-ist) and/or the speed (v-ist) of the at least one rotor (L) on the segment (Seg) is assigned to the segment (Seg), wherein a signalling strip (Sig) is assigned to the segment (Seg), wherein the signalling strip (Sig) comprises a plurality of signalling devices, in particular optical signalling devices, arranged next to one another, wherein the linear drive (LA) comprises a controller (SE), wherein the controller (SE) is provided for defining the movement of the at least one rotor (L) on the at least one segment (Seg), wherein the sensor (PS) is configured to provide the position (x-ist) and/or the speed (v-ist) of the at least one rotor (L) for the controller (SE), **characterized in that** the signalling strip (Sig) is embodied to display a state of the segment (Seg), wherein the state of the segment (Seg) specifies the degree of dirtying or a functional state or a reaching of a maintenance cycle of the segment (Seg) and the controller (SE) is configured to provide a signal (S) for the signalling strip (Sig) on the basis of the position (x-ist) and/or the speed (v-ist) of the at least one rotor (L), wherein the signalling strip (Sig) is embodied to specify the state (Zust) at the position (x-ist) on the basis of the signal (S) of the controller (SE), said position corresponding to the position of the rotor (L) , wherein first signalling devices of the signal light display the position of the rotor on the segment assigned to the signalling strip and second signalling devices of the signalling strip display the state of the segment.

2. Linear drive (LA) according to Claim 1, wherein the signalling strip (Sig) is embodied as an LED strip.

3. Linear drive (LA) according to Claim 1, wherein the signalling strip (Sig) is assigned to the sensor (PS).

4. Linear drive (LA) according to any one of the preceding claims, wherein the controller (SE) provides the signal (S) for the signalling strip (Sig).

5. Linear drive (LA) according to any one of the preceding claims, wherein the signal (S) for the signalling strip (Sig) is provided by a network.

6. Linear drive (LA) according to any one of the preceding claims, wherein the linear drive (LA) comprises a further signal connection (SV) between the respective segment (Seg) and the controller (SE), wherein the signal connection (SV) is provided both for transmitting the position (x-ist) and/or the speed (v-ist) from the sensor (PS) to the controller (SE) and for transmitting status signals, in particular of the respective rotor (L) , from the controller (SE) to the respective signalling strip (Sig).

7. Linear drive (LA) according to any one of the preceding claims, wherein the signalling strip (Sig) is embodied to display an unpredicted state of the corresponding segment (Seg) or of a control unit (U) , wherein the control unit is assigned to the corresponding segment.

8. Linear drive (LA) according to any one of the preceding claims, wherein the at least one rotor (L) respectively has a storage element (DE), wherein the storage element (DE) is embodied to record a state of the respective rotor (L), and the state of the respective rotor (L) is displayable by the signalling strip (Sig).

9. Installation (A), in particular production machine, machine tool, packaging machine or filling installation, comprising a linear drive (LA) according to any one of Claims 1 to 8.

10. Method for operating a linear drive (LA), wherein a sensor (PS) determines at least a position (x-ist) and/or a speed (v-ist) of a rotor (L) on a segment (Seg) of the linear drive (LA) assigned to the sensor (PS) and provides the position (x-ist) and/or the speed (v-ist) of the at least one rotor (L) for a controller (SE) of the linear drive (LA), wherein the controller (SE) specifies a movement of the at least one rotor (L) on the at least one segment (Seg), wherein a signalling strip (Sig) is assigned to the segment (Seg), wherein the signalling strip (Sig) comprises a plurality of signalling devices arranged next to one another, **characterized in that** a signal (S) for the signalling strip (Sig) is provided by the controller (SE) on the basis of the position (x-ist)/or the speed (v-ist) of the at least one rotor (L), wherein the signalling strip (Sig) specifies a state (Zust) of the segment (Seg) at the position (x-ist) corresponding to the rotor (L) on the basis of the signal (S) of the controller (SE), wherein the state of the segment (Seg) specifies the degree of dirtying or a functional state or a reaching of a maintenance cycle of the segment (Seg), wherein first signalling devices of the signalling strip display the position of the rotor on the segment assigned to the signalling strip and second signalling devices of the signalling strip display the state of the segment.

## Revendications

1. Entraînement linéaire (LA), comprenant au moins un segment (Seg) pour l'entraînement linéaire (LA) destiné à déplacer au moins un chariot (L) sur le segment (Seg), dans lequel un capteur (PS) destiné au moins à déterminer la position (x-ist) et/ou la vitesse (v-ist) du au moins un chariot (L) sur le segment (Seg) est associé au segment (Seg), dans lequel une bande de signal (Sig) est associée au segment (Seg), la bande de signal (Sig) comprend une pluralité de générateurs de signal, en particulier de générateurs de signal optiques disposés l'un à côté de l'autre, l'entraînement linéaire (LA) comprend un dispositif de commande (SE), le dispositif de commande (SE) étant conçu pour définir le déplacement du au moins un chariot (L) sur l'au moins un segment (Seg), et le capteur (PS) est configuré pour fournir pour le dispositif de commande (SE) la position (x-ist) et/ou la vitesse (v-ist) du au moins un chariot (L),
**caractérisé en ce que** la bande de signal (Sig) est configurée pour afficher un état du segment (Seg), dans lequel l'état du segment (Seg) indique le degré d'encrassement ou un état fonctionnel ou l'atteinte d'un cycle d'entretien du segment (Seg), et le dispositif de commande (SE) est configuré pour fournir, sur la base de la position (x-ist) et/ou de la vitesse (v-ist) du au moins un chariot (L), un signal (S) pour la bande de signal (Sig), et la bande de signal (Sig) est configurée pour indiquer, sur la base du signal (S) du dispositif de commande (SE), l'état à la position (x-ist) qui correspond à la position du chariot (L) , dans lequel des premiers générateurs de signal du témoin lumineux affichent la position du chariot sur le segment associé à la bande de signal et des seconds générateurs de signal de la bande de signal affichent l'état du segment.

2. Entraînement linéaire (LA) selon la revendication 1, dans lequel la bande de signal (Sig) est configurée sous forme d'une bande de LED.

3. Entraînement linéaire (LA) selon la revendication 1, dans lequel la bande de signal (Sig) est associée au capteur (PS) .

4. Entraînement linéaire (LA) selon l'une des revendications précédentes, dans lequel le dispositif de commande (SE) fournit le signal (S) pour la bande de signal (Sig).

5. Entraînement linéaire (LA) selon l'une des revendications précédentes, dans lequel le signal (S) est fourni à la bande de signal (Sig) par un réseau.

6. Entraînement linéaire (LA) selon l'une des revendications précédentes, dans lequel l'entraînement linéaire (LA) comprend en outre une liaison de signal (SV) entre le segment respectif (Seg) et le dispositif de commande (SE), dans lequel la liaison de signal (SV) est configurée pour transmettre la position (x-ist) et/ou la vitesse (v-ist) du capteur (PS) au dispositif de commande (SE) ainsi que pour transmettre des signaux d'état, en particulier du chariot respectif (L), du dispositif de commande (SE) à la bande de signal (Sig) respective.

7. Entraînement linéaire (LA) selon l'une des revendications précédentes, dans lequel la bande de signal (Sig) est configurée pour afficher un état imprévu du segment correspondant (Seg) ou d'un module de commande (U) , le module de commande étant associé au segment correspondant.

8. Entraînement linéaire (LA) selon l'une des revendications précédentes, dans lequel l'au moins un chariot (L) comprend respectivement un élément de mémoire (DE), l'élément de mémoire est configuré pour recevoir un état du chariot (L) respectif et l'état du chariot respectif (L) peut être affiché par la bande de signal (Sig).

9. Installation (A), en particulier machine de production, machine-outil, machine d'emballage ou installation de remplissage, comprenant un entraînement linéaire (LA) selon l'une des revendications 1 à 8.

10. Procédé de fonctionnement d'un entraînement linéaire (LA), dans lequel un capteur (PS) détermine au moins une position (x-ist) et/ou une vitesse (v-ist) d'un chariot (L) sur un segment (Seg) de l'entraînement linéaire (LA) associé au capteur (PS) et fournit la position (x-ist) et/ou la vitesse du au moins un chariot (L) pour un dispositif de commande (SE) de l'entraînement linéaire (LA), dans lequel le dispositif de commande (SE) définit un déplacement du au moins un chariot (L) sur l'au moins un segment (Seg), dans lequel une bande de signal (Sig) est associée au segment (Seg), et la bande de signal (Sig) comprend une pluralité de générateurs de signal disposés l'un à côté de l'autre,
**caractérisé en ce qu'**un signal (S) est fourni par le dispositif de commande (SE) pour la bande de signal (Sig) sur la base de la position (x-ist) et/ou de la vitesse (v-ist) du au moins un chariot (L) , dans lequel la bande de signal (Sig) indique, sur la base du signal (S) du dispositif de commande (SE), un état (Zust) du segment (Seg) à la position (x-ist) qui correspond au chariot (L), dans lequel l'état du segment (Seg) indique le degré d'encrassement ou un état fonctionnel ou une atteinte d'un cycle d'entretien du segment (Seg), et dans lequel des premiers générateurs de signal de la bande de signal affichent la position du chariot sur le segment associé à la bande de signal et des seconds générateurs de signal de la bande de signal affichent l'état du segment.
